# EUROPÄISCHE PATENTSCHRIFT

(11) **EP 3 502 569 B1**
(45) Veröffentlichungstag und Bekanntmachung des Hinweises auf die Patenterteilung: **07.09.2022**
(21) Anmeldenummer: 18214296.8
(22) Anmeldetag: 20.12.2018
(51) Int. Cl.: F24C 7/08, A21B 7/00, F27D 21/02, F27D 21/04

(54) **VERFAHREN UND VORRICHTUNG ZUR OPTIMIERUNG EINES BACKVORGANGS**
METHOD AND DEVICE FOR OPTIMISING A BAKING PROCESS
PROCÉDÉ ET DISPOSITIF D'OPTIMISATION D'UN PROCESSUS DE CUISSON

(30) Priorität: 21.12.2017 DE 102017131036
(43) Veröffentlichungstag der Anmeldung: 26.06.2019
(60) Teilanmeldung: 22175822.0
(73) Patentinhaber: MIWE Michael Wenz GmbH, 97450 Arnstein (DE)
(72) Erfinder: Issing, Adrian, 97080 Würzburg (DE); Weigel, Christoph, 98617 Stepfershausen (DE); Klatt, Uwe, 97273 Kürnach (DE); Leppich-Rudloff, Ronny, 97753 Karlstdt (DE); Schmidt, Steven, 97711 Maßbach (DE); Seipp, Stephan, 65719 Hofheim am Taunus (DE)
(74) Vertreter: Freischem & Partner Patentanwälte mbB

(56) Entgegenhaltungen:
- DE-B3-102013 110 644

## Beschreibung

Die Erfindung betrifft ein Verfahren und eine Vorrichtung zur Optimierung eines Backvorgangs, insbesondere in gewerblichen Backeinrichtungen wie Bäckereien, Backwarenfabriken und Verkaufsräumen mit Backöfen, gemäß den Oberbegriffen der Ansprüche 1 und 8.

In gewerblichen Backeinrichtungen, insbesondere in Verkaufsräumen des Lebensmitteleinzelhandels mit Backöfen, kommen Vorbereitungstische zum Einsatz, um Teiglinge auf die Behandlung im Backofen vorzubereiten. Auf für die Lebensmittelverarbeitung geeignete Arbeitsoberflächen, z.B. Edelstahloberflächen, der Vorbereitungstische werden Backgutträger, meist Backbleche, aufgelegt und durch eingewiesenes Personal mit Teiglingen belegt. Dieses Belegen erfolgt in Handwerksbäckereien durch geschultes Fachpersonal. Im Lebensmitteleinzelhandel erfolgt es dagegen häufig durch kurz eingewiesenes Verkaufspersonal ohne besondere Kenntnisse im Bereich des Backens. Um dennoch eine weitgehend korrekte Belegung der Backgutträger zu erzielen, sind nahe den Arbeitsflächen der Vorbereitungstische Belegungspläne angeordnet, denen das Personal die korrekte Belegung mit unterschiedlichen Teiglingen entnehmen kann. Das Arbeiten nach den Belegungsplänen erfordert aber auch ein erhebliches Maß an Erfahrungen und Fähigkeiten, um die Informationen auf den Belegungsplänen korrekt zu erfassen und umzusetzen.

Die Druckschrift EP 2 106 700 B1 offenbart eine Backanlage in einem Supermarkt, bei der an einer Beladestelle eine Anzeige-/Eingabevorrichtung vorgesehen ist, die auf zwei Weisen genutzt werden kann. Entweder liest eine Bedienperson von der Anzeige der Anzeige-/Eingabevorrichtung die zu bestückende Art der Backwaren aus und bestückt Trägerelemente für die Backwaren entsprechend. Oder die Bedienperson bestückt die Trägerelemente nach ihrer Wahl und gibt über die Anzeige-/Eingabevorrichtung der Steuerung der Backanlage die entsprechende Information über die Art bzw. Menge der bestückten Backwaren ein.

Die Druckschrift DE 10 2013 110 644 B3 beschreibt ein Gargerät mit einer Erfassungsvorrichtung, einer Markierungsvorrichtung und einer Steuerung, wobei die Steuerung Bildsignale von der Erfassungsvorrichtung erhält, eine Garzeit für ein zu garendes Lebensmittel ermittelt und nach Abschluss der Garzeit die Markierungsvorrichtung ansteuert. Die zu garenden Lebensmittel werden zu Beginn eines Garvorgangs mittels der Erfassungsvorrichtung erfasst und bei Abschluss eines Garvorgangs mittels der Markierungsvorrichtung markiert. Die Erfassungsvorrichtung kann auch nicht belegte Flächen auf dem Gargutträger erkennen, und das Gargerät gibt in Abhängigkeit von den nicht belegten Gargutplätzen und dem Platzbedarf oder Gargutprozess des neu eingebrachten Lebensmittels eine Empfehlung für eine Beschickung ab.

Aufgabe der Erfindung ist es, den Vorbereitungsvorgang des Backvorgangs zu optimieren.

Diese Aufgabe wird in Bezug auf das Verfahren durch die Gesamtheit der Merkmale des Anspruchs 1 gelöst. Sie wird in Bezug auf die Vorrichtung durch die Gesamtheit der Merkmale des Anspruchs 8 gelöst.

Es wird ein Verfahren zur Optimierung eines Backvorgangs mit folgenden Schritten vorgeschlagen:
- Auflegen eines Backgutträgers auf eine Arbeitsfläche;
- Belegen des Backgutträgers mit Teiglingen durch das Bedienungspersonal;
- Erfassen der Ist-Belegung durch eine Bildaufnahmevorrichtung und Übertragung der erfassten Daten an einen Computer;
welches zusätzlich folgende Schritte aufweist:
- Speichern von Daten für die Soll-Belegung, einschließlich des genauen Belegungsplans mit den Positionen und Ausrichtungen der Backwaren, auf einer mit dem Computer gekoppelten Datenspeichereinheit;
- Übertragung von Anzeigedaten durch den Computer an eine digital angesteuerte Anzeigevorrichtung nahe der Arbeitsfläche zum Anzeigen einer Soll-Belegung;
- Auswerten der erfassten Daten der Ist-Belegung durch den Computer und Vergleich mit den Daten der Soll-Belegung;
- Einwirken auf den Belegungsvorgang und/oder den Backvorgang durch den Computer auf der Grundlage des Vergleichs der erfassten Daten der Ist-Belegung mit den Daten der Soll-Belegung, wobei ein Signal ausgegeben wird, wenn die erfasste Ist-Belegung von der Soll-Belegung abweicht.

Mit anderen Worten wird der Belegungsplan durch eine digital ansteuerbare Anzeigevorrichtung, zum Beispiel einen Bildschirm oder einen Projektor, angezeigt. Dem Bedienpersonal werden von der Steuerung also nicht wie bei der EP 2 106 700 B1 nur Informationen über die Art und Menge der Backwaren übermittelt, sondern der genaue Belegungsplan mit den Positionen und Ausrichtungen der Backwaren angezeigt. Der Bildschirm kann über der Arbeitsfläche hängen. Er kann aber auch unter der Arbeitsfläche angeordnet sein, wenn die Arbeitsfläche transparent ist und z.B. aus Glas besteht. In diesem Fall kann der Backgutträger unmittelbar neben die Anzeige auf dem Bildschirm gelegt werden, so dass mit einem Blick die Vorgaben für die Soll-Belegung auf dem Bildschirm gemeinsam mit der Ist-Belegung auf dem Backgutträger erfasst werden. Alternativ kann die Anzeigevorrichtung ein Projektor sein. Die Projektion kann auf eine Leinwand oder eine helle Gebäudewand nahe der Arbeitsfläche geworfen werden. Sie kann aber auch auf die Arbeitsfläche selbst geworfen werden. Hierfür ist die Arbeitsfläche weiß oder in heller Farbe und möglichst matt auszugestalten, damit die projizierte Darstellung klar und gut zu erkennen ist.

Ferner wird die Ist-Belegung durch eine Bildaufnahmevorrichtung erfasst und die erfassten Daten an den Computer übertragen. Die Erfassung kann entweder gleichzeitig mit dem Anzeigen oder abwechselnd mit dem Anzeigen erfolgen. Die abwechselnde Vorgehensweise ist vor allem bei einer Projektion auf die Arbeitsfläche selbst sinnvoll, damit die Erfassung tatsächlich vorhandene Teiglinge und nicht projizierte Teiglinge erfasst.

Die erfassten Daten werden durch den Computer mit den Daten der Soll-Belegung verglichen. Der Computer wirkt auf der Grundlage dieses Vergleichs auf den Belegungsvorgang und/oder auf den Backvorgang ein.

Zum Beispiel kann der Computer die Ausgabe eines Alarmsignals im Falle einer Fehlbelegung veranlassen. Zu diesem Zweck kann eine Signalvorrichtung wie ein Lautsprecher oder eine Leuchte mit dem Computer gekoppelt sein, die bei der Ermittlung einer Fehlbelegung zur Abgabe eines Signals angesteuert wird. Das Alarmsignal kann aber auch durch die Anzeigevorrichtung selbst abgegeben werden. Zum Beispiel kann der durch die Anzeigevorrichtung angezeigten Soll-Belegung eine Darstellung der Ist-Belegung überlagert werden, in der die Fehlbelegung optisch hervorgehoben ist. Die Fehlbelegung kann beispielsweise heller dargestellt sein oder mit einer farbigen Umgrenzung markiert sein. Bei einer Anzeige unmittelbar durch Projektion auf der Arbeitsfläche fällt es besonders leicht, den Teigling, der sich am Ort der markierten Anzeige seiner Positionierung befindet, so zu verschieben, dass er sich an dem für den Backvorgang optimalen Ort befindet.

Der Computer kann ferner über eine Schnittstelle mit dem Backofen gekoppelt sein, in den der belegte Backgutträger (Backblech) zum Abbacken eingebracht wird. So kann der Computer auf der Grundlage der erfassten Ist-Belegung optimierte Backparameter an den Backofen übertragen, um auf den Backvorgang einzuwirken und diesen zu optimieren. Meist werden Backöfen mit mehreren Backgutträgern beschickt. Wenn diese alle an einer Arbeitsfläche der hier beschriebenen Art belegt werden, können Backparameter auf der Grundlage der Belegungsdaten aller Backgutträger ermittelt werden. Die Backparameter sind beispielsweise Backtemperatur, Backdauer, Zeitpunkt und Menge der Wasserzugabe zur Erzeugung eines Backschwadens.

Um einen bestimmten Backgutträger einem bestimmten Backvorgang zuzuordnen, kann mit dem Computer mindestens eine Erfassungseinheit verbunden sein, die das Einbringen eines belegten Backgutträgers in einen Backofen erfasst. Z.B. kann dem Backgutträger ein Barcode oder ein QR-Code zugeordnet sein, der beim Belegen von der Bildaufnahmevorrichtung erfasst wird und der zusammen mit den Daten der spezifischen Belegung des Backgutträgers abgespeichert wird. Eine Erfassungseinheit, welche den Barcode oder QR-Code liest, erfasst das Einbringen des Backgutträgers in den Backofen. Dabei kann die Erfassungseinheit den Code des Backgutträgers direkt beim Einbringen erfassen. In diesem Fall handelt es sich bei der Erfassungseinheit beispielsweise um eine Kamera nahe der Ofentür. Es ist aber auch möglich, dass der Backgutträger in einem Zwischenschritt in einen Backwagen eingebracht wird und anschließend nicht mehr lesbar ist. Am Backofen kann dann nur noch der Backwagen oder der oberste Backgutträger in dem Backwagen gelesen werden. Zu diesem Zweck kann das Einbringen des Backgutträgers in einen Backwagen erfasst werden und es reicht aus, dass am Backofen nur der oberste Barcode auf dem obersten Backgutträger ausgelesen wird, um die vollständigen Informationen über die Belegung aller Backbleche in dem Backwagen zu erlangen. Wichtig ist, dass jeder Backgutträger bis zum Einbringen in den Backofen getrackt wird, damit die Backparameter auf die Belegung jedes Backgutträgers eingestellt werden können. Hierzu können natürlich auch andere Identifikationkennzeichen, z.B. RFID-Tags oder auch optische Erkennung per Bildauswertung, eingesetzt werden. Eine Erfassungseinheit kann auch die Entnahme der Backwaren aus dem Ofen erfassen und so aufgrund optischer Merkmale wie Färbung der Backwaren und Größe der Backwaren die Qualität des Backergebnisses beurteilen.

In der Praxis werden die Daten für die Soll-Belegung und/oder die Backparameter auf einer mit dem Computer gekoppelten Datenspeichereinheit gespeichert. Sowohl die Datenübertragung von und zu dem Computer als auch die Datenübertragung von und zu der Datenspeichereinheit können über das Internet erfolgen. So kann ein Betreiber mehrerer Lebensmitteleinzelhandelsgeschäfte mit Backöfen einen zentralen Computer und eine zentrale Datenspeichereinheit, ggf. mit einem Backup-System, betreiben, um die Anzeigen und die Bilderfassungseinrichtungen sämtlicher Vorbereitungstische mit Arbeitsflächen anzusteuern. Hierdurch werden zum einen Kosten für die wiederholte Einrichtung und Pflege mehrerer Datenverarbeitungssysteme gespart. Es muss nur das Hauptsystem und ggf. das Backup-System eingerichtet und finanziert werden. Ferner verarbeitet das zentrale System eine größere Anzahl von Daten, so dass eine Auswertung der Daten und eine Anpassung der Soll-Daten unter Einsatz eines Algorithmus mit künstlicher Intelligenz sehr viel zuverlässiger ablaufen kann, als bei einzelnen dezentralen Computern in jedem Geschäft. Schließlich vereinheitlicht die vernetzte und zentral gesteuerte Datenerfassung und Datenausgabe durch einen zentralen Computer die Backergebnisse in den verschiedenen Verkaufsgeschäften.

Es ist auch möglich, dass der zentrale Computer zur Vorgabe der Soll-Belegung und zur Erfassung und zum Vergleich der Ist-Belegung beim Hersteller der Backöfen installiert und über das Internet mit den verschiedenen Verkaufsgeschäften oder Standorten der Backöfen verbunden ist. Auf diese Weise kann der Hersteller die Daten aus den Verkaufsgeschäften verschiedener Kunden sammeln und zur Optimierung des Systems einsetzen.

Für die Bildanzeige kommen folgende Anzeigevorrichtungen in Frage:
- ein Bildschirm;
- ein Projektor, insbesondere ein Videoprojektor wie ein LCD-Projektor (auch Beamer genannt) oder ein Laserprojektor;
- eine AR-Brille (Augmented Reality Brille).

Wie erwähnt, kann die Darstellung unmittelbar auf der Arbeitsfläche erkennbar sein, insbesondere bei Verwendung eines oberhalb der Arbeitsfläche befindlichen Projektors, aber auch bei Verwendung eines Bildschirms unterhalb einer transparenten Arbeitsfläche. Auch kann das Bedienungspersonal eine Augmented Reality Brille (AR-Brille - auch Datenbrille genannt) tragen, welche virtuell Informationen vor die Augen des Brillenträgers projiziert, während er weiterhin die Außenwelt sehen kann. Derartige Datenbrillen sind z.B. als Google Glass oder Microsoft HoloLens bekannt.

Die Bildaufnahmevorrichtung kann zum Beispiel Folgendes sein:
- eine zweidimensionale Monochromkamera;
- eine zweidimensionale Farbkamera;
- eine Stereoskopiekamera, also eine 3D-Kamera (entweder monochrom oder in Farbe);
- eine Time-of-Flight (ToF) Kamera (monochrom oder in Farbe);
- ein Laserscanner.

Ein Laserscanner erfasst ein dreidimensionales Bild und tastet die Bildpunkte einzeln ab. Sowohl eine Stereoskopiekamera (Kamera mit zwei Objektiven, die zwei Bilder erzeugt) als auch eine Time-of-Flight-Kamera, die gleichzeitig mit der Helligkeit oder Farbe der Bildpunkte auch die Laufzeit des Lichts erfasst, erzeugen mit jedem Bild bei simultaner Erfassung aller Bildpunkte eine dreidimensionale Darstellung.

Der Computer analysiert die Bilddaten und berücksichtigt dabei folgende Daten:
- Art der Backware
- Menge der Backware
- Ausrichtung der Backware
- Zustand des Backblechs (vorhanden, nicht vorhanden, beschädigt, verschmutzt, korrekter Backblechtyp (Farbe, Beschichtung), Backpapier vorhanden).
- Abstände der Backwaren zueinander;
- Abstände der Backwaren zum Blechrand.

Der Computer kann auch den Backwarenbedarf berechnen oder anhand von Erfahrungswerten, die er über seine Betriebszeit gewonnen hat, ermitteln. Ferner kann der Computer die Anzahl der produzierten Backwaren und der verbrauchten oder abverkauften Backwaren erfassen und daraus den Backwarenbedarf berechnen. So kann der Computer flexible, anhand des berechneten oder ermittelten Bedarfs an verschiedenen Backwaren optimale Belegungsmuster der verschiedenen Backbleche berechnen und für jeden Belegungsvorgang individuell am Vorbereitungstisch anzeigen. Durch ein Fehlersignal bei einer Abweichung von der vorgegebenen Belegung kann der Computer den Belegungsvorgang optimieren. Der Computer berechnet aus den benötigten Backwaren die vollständigen Backaufträge, das heißt die Soll-Belegung aller Backgutträger, die für einen Backvorgang in den Backofen einzubringen sind. Dabei berücksichtigt der Computer, welche Backwaren optimal zusammen gebacken werden können (z.B. Kaisersemmel und Schnittbrötchen). Der Computer führt eine sinnvolle Gruppierung der Backwaren auf einem Backblech und der verschiedenen Backbleche für einen Backvorgang durch. Der Computer erfasst dabei auch durch die Bildaufnahmevorrichtung die tatsächliche Belegung jedes einzelnen Backgutträgers, der für einen Backvorgang in den Ofen eingebracht wird, inclusive aller etwaigen Fehlbelegungen, und kann - wie oben erwähnt - daraus die optimalen Backparameter wie z.B. Backzeit und Backtemperatur berechnen und an den Backofen übermitteln.

Die Software für die Steuerung der Belegung sowie die durch sie ermittelten und vorgegebenen Parameter können durch Optimierungsalgorithmen nach den Methoden der künstlichen Intelligenz optimiert werden. Die Ergebnisse und die Abläufe der Backvorgänge können dabei durch manuelle Eingabe oder automatische Überwachung, z.B. durch Bilderfassung, aufgenommen und zur Optimierung der Parameter eingesetzt werden. Zumindest kann einer der folgenden Parameter optimiert werden:
- die Backparameter;
- die Auswertung der Bilddaten;
- die Soll-Belegung der Backgutträger;
- die Gruppierung der Backwaren, die auf einem Backblech und/oder während eines Backvorgangs miteinander kombiniert werden.

Dabei ist es vorteilhaft, wenn der Computer möglichst viele Backvorgänge an möglichst vielen Backstationen überwacht und steuert. Es ist auch nützlich, wenn entweder eine Bildaufnahmevorrichtung und/oder das Bedienungspersonal des Backofens Informationen über das Backergebnis an den Computer übermittelt. Informationen wie Helligkeit und Farbe lassen sich am leichtesten über eine Bildaufnahmevorrichtung erfassen. Dafür kann die gleiche Bildaufnahmevorrichtung verwendet werden, wie für die Beobachtung des Belegungsvorgangs, oder aber auch eine andere Bildaufnahmevorrichtung.

Eine Vorrichtung zur Optimierung eines Backvorgangs weist eine Arbeitsfläche zum Auflegen eines Backgutträgers auf und eine Bildaufnahmevorrichtung zum Erfassen der Ist-Belegung, die zur Übertragung der erfassten Daten mit dem Computer gekoppelt ist. Zusätzlich sind folgende Merkmale vorhanden:
- eine mit dem Computer gekoppelte Datenspeichereinheit, auf der die Daten für eine Soll-Belegung, einschließlich des genauen Belegungsplans mit den Positionen und Ausrichtungen der Backwaren, gespeichert sind;
- eine digital angesteuerte Anzeigevorrichtung nahe der Arbeitsfläche zum Anzeigen der Soll-Belegung;
- wobei der Computer Anzeigedaten an die Anzeigevorrichtung überträgt sowie die erfassten Daten der Ist-Belegung auswertet und mit den Daten der Soll-Belegung vergleicht;
- eine Signalvorrichtung zur Ausgabe eines Alarmsignals, wenn die erfasste Ist-Belegung von der Soll-Belegung abweicht.

Auf dem Prozessor des Computers kann ein Computerprogrammprodukt zum Auswerten der erfassten Daten und zum Vergleich mit den Daten der Soll-Belegung sowie zum Einwirken auf den Belegungsvorgang und/oder den Backvorgang ablaufen. Insbesondere können die Ergebnisse des Programmprodukts nach den Methoden der künstlichen Intelligenz optimiert werden. Mit dem Computer kann eine Signalvorrichtung gekoppelt sein. Der Computer kann über eine Datenschnittstelle mit einem Backofen gekoppelt sein. Mit dem Computer ist mindestens eine Datenspeichereinheit gekoppelt. Der Computer kann zur Datenübertragung mit dem Internet verbunden sein. Dadurch ist die Umsetzung des Verfahrens an verschiedenen Orten mittels eines zentral aufgestellten Computers, der mit den Geräten an den verschiedenen Orten über das Internet kommuniziert, möglich.

Weitere praktische Ausführungsformen und Vorteile der Erfindung sind nachfolgend im Zusammenhang mit den Zeichnungen beschrieben.
Fig. 1 zeigt eine dreidimensionale Darstellung einer ersten Ausführungsform eines Vorbereitungstisches gemäß der Erfindung.
Fig. 2 zeigt eine zweite Ausführungsform eines Vorbereitungstisches in dreidimensionaler Darstellung.
Fig. 3 zeigt eine dritte Ausführungsform eines Vorbereitungstisches in Kombination mit einem Backofen.
Fig. 4 zeigt eine angezeigte Darstellung, die bei dem erfindungsgemäßen Verfahren verwendet wird.

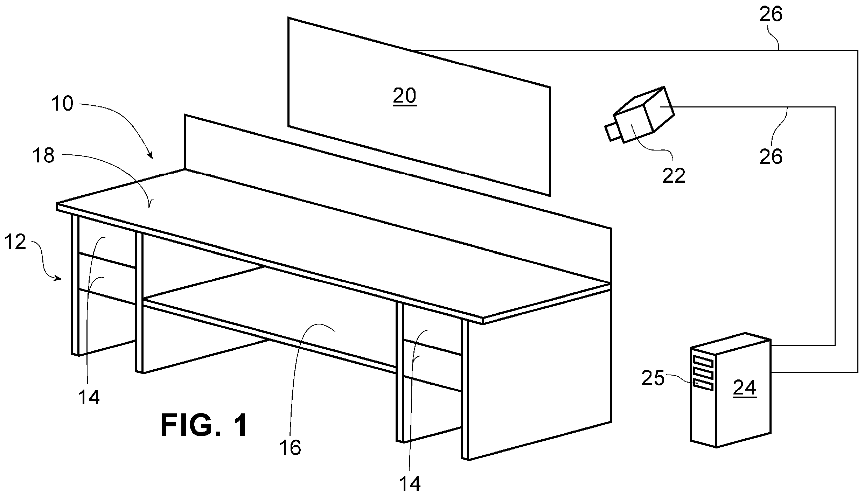

In der Fig. 1 ist ein Vorbereitungstisch 10 zu erkennen, der ein Tischgestell 12 aufweist. Das Tischgestell 12 weist an den Seiten Schubläden 14 und in der Mitte ein Ablagefach 16 auf. Die Arbeitsoberfläche 18 des Vorbereitungstisches 10 besteht aus einem für die Lebensmittelverarbeitung geeigneten Material, beispielsweise aus Edelstahl.

Gemäß der Erfindung ist oberhalb der Arbeitsoberfläche 18 eine Anzeigevorrichtung, im vorliegenden Fall ein flacher LCD-Bildschirm 20 angeordnet. Der Bildschirm 20 wird sinnvollerweise an einer Wand (nicht dargestellt) des Arbeitsraums angeordnet in dem der Vorbereitungstisch 10 steht. Ebenfalls an einer Wand oder Decke (nicht dargestellt) des Arbeitsraums ist eine Bildaufnahmevorrichtung 22 angeordnet. Die Bildaufnahmevorrichtung 22 ist auf die Arbeitsoberfläche 18 gerichtet. Es kann sich bei der Bildaufnahmevorrichtung 22 um eine herkömmliche Kamera, eine 3-D-Kamera, die im Stereoskopieverfahren arbeitet, einen Laserscanner oder eine ToF-Kamera (ebenfalls eine 3D-Kamera) handeln. Die Bildaufnahmevorrichtung 22 kann auf der Arbeitsoberfläche 18 angeordnete Backbleche erfassen, welche mit Teiglingen zum Backen belegt werden. Dieser Vorgang wird weiter unten beschrieben.

Die Bildaufnahmevorrichtung 22 und der Bildschirm 20, der die Anzeigevorrichtung bildet, sind über Datenleitungen 26 mit einem Computer 24 verbunden. Der Computer 24 wertet die durch die Bildaufnahmevorrichtung 22 aufgenommenen Bilder aus und vergleicht die daraus ermittelten Daten mit Soll-Werten. Insbesondere werden die aufgelegten Teiglinge erfasst, die durch Formenvergleich identifiziert werden können. Anhand der erkannten Teiglinge kann der Abstand ermittelt werden, den ein Teigling zum benachbarten Teigling oder zum Rand des Backblechs aufweisen muss.

Der Computer 24 gibt die Belegung eines Backblechs, das heißt die Art und Anzahl sowie die Position der aufzulegenden Teiglinge, vor. Dies kann beispielsweise auf der Grundlage einer manuellen Eingabe der zu produzierenden Backwaren geschehen. Das Bedienungspersonal kann z.B. über eine Tastatur oder eine andere Eingabevorrichtung (auch über Spracheingabe) die jeweilige Anzahl der verschiedenen in einem Backvorgang zu erzeugenden Backwaren vorgeben. Aus der Anzahl und der Art der benötigten Backwaren ermittelt der Computer 24 dann die optimale Position der Backwaren auf dem Backblech oder auf den Backblechen, wenn der Backofen zum Abbacken mehrerer übereinander angeordneter Backbleche ausgelegt ist. Der Computer 24 kann aber auch mit einem Kassensystem gekoppelt sein, sodass ihm Informationen zugeleitet werden, wie viele Backwaren einer bestimmten Art in einem bestimmten Zeitraum abverkauft werden. Aus der erfassten Verkaufszahl und Verkaufsgeschwindigkeit jeder Backwarenart kann der Computer 24 berechnen, wie viele Backwaren jeder Backwarenart nachzubacken sind. Die Kopplung eines Kassensystems mit einer Datenverarbeitungseinheit zur Ermittlung der erforderlichen Backwarenzahl ist in der Druckschrift DE 10 2005 016 769 B4 der Anmelderin im Detail beschrieben. In der genannten Druckschrift wird mit den ermittelten Bedarfszahlen für die verschiedenen Backwaren eine automatische Backvorrichtung gesteuert. Im vorliegenden Fall wird der ermittelte Backwarenbedarf dazu verwendet, die optimale Belegung der Backgutträger (Backbleche) zu berechnen und über die Anzeigevorrichtung, nämlich den Bildschirm 20, dem Bedienungspersonal, das den Backgutträger belegt, anzuzeigen.

Wenn die von der Kamera 22 erfasste Belegung eines Backgutträgers von der vorgegebenen Soll-Belegung abweicht, kann ein Signal ausgegeben werden. Beispielsweise kann der Bildschirm 20 mit einem Lautsprecher versehen sein, der einen Signalton ausgibt. Alternativ kann ein optisches Signal entweder durch eine Darstellung auf dem Bildschirm 20 oder eine zusätzliche Warnlampe (nicht dargestellt) abgegeben werden. Alternativ oder zusätzlich kann der falsch positionierte Teigling auf dem Bildschirm 20 angezeigt und farblich hervorgehoben werden. Gleichzeitig wird die Soll-Position auf dem Bildschirm 20 angezeigt, sodass das Bedienungspersonal die falsche Positionierung des Teiglings korrigieren kann.

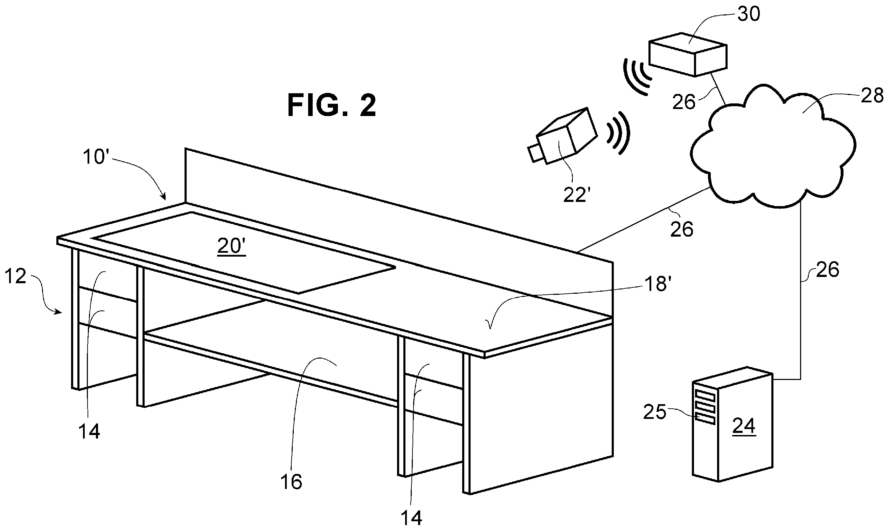

Die Fig. 2 zeigt eine alternative Ausführungsform eines Vorbereitungstisches 10'. Hier ist die Anzeigevorrichtung, nämlich der Bildschirm 20', unterhalb der Arbeitsoberfläche 18' angeordnet. Die Arbeitsoberfläche 18' ist im vorliegenden Fall transparent ausgebildet und besteht beispielsweise aus Glas. Da auf die Arbeitsoberfläche 18' auch die Backgutträger/Backbleche aufzulegen sind, ist der Bildschirm 20' nach links verschoben. Die Backgutträger können zum Belegen auf den rechten Abschnitt der Arbeitsoberfläche 18' aufgelegt werden.

In Fig. 2 ist schematisch dargestellt, dass die miteinander zusammenwirkenden Komponenten über das Internet 28 miteinander verbunden sind. Der Computer 24 und der Bildschirm 20' im Vorbereitungstisch 10' sind wiederum über Datenleitungen 26 verbunden. Die Bildaufnahmevorrichtung 22 weist ein WLAN-Modul auf, welches mit einem WLAN-Router 30 kommuniziert, der an das Internet 28 angeschlossen ist.

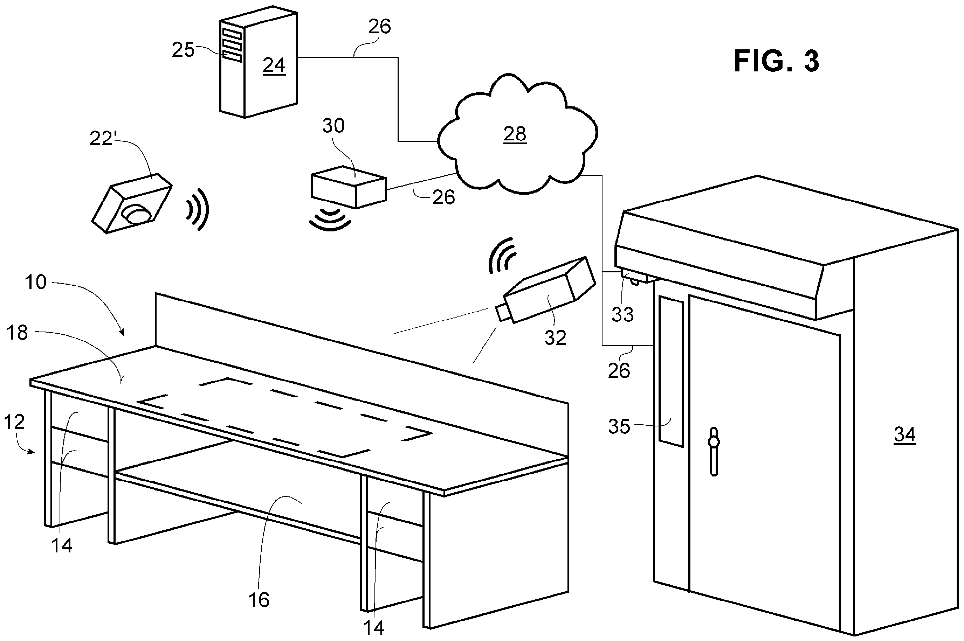

In der Ausführungsform der Fig. 3 ist der Arbeitstisch 10 wieder frei von einer Anzeigevorrichtung. Die Anzeigevorrichtung wird hier von einem Projektor 32 gebildet, der zum Beispiel ein LCD-Projektor oder ein Laserprojektor sein kann. Die Bildaufnahmevorrichtung 22' ist bei dieser Ausführungsform auf der gegenüberliegenden Seite des Vorbereitungstisches 10 angeordnet. Sie kann aber auch auf der gleichen Seite liegen oder auch gemeinsam mit dem Projektor 32 in einem Gehäuse montiert werden. Sowohl der Projektor 32, der die Anzeigevorrichtung bildet, als auch die Bildaufnahmevorrichtung 22' kommunizieren mit dem Internet 28 über einen WLAN-Router 30. Es ist für den Fachmann allerdings erkennbar, dass die Datenverbindung zum Internet 28 beliebig ausgestaltet sein kann. Andere Funk-Kommunikationsstandards als WLAN (Z. B. Bluetooth) können verwendet werden. Auch sind mobile Datenkommunikationsstandards wie LTE oder UMTS einsetzbar. Schließlich können alle Geräte über Datenleitungen 26 mit dem Internet 28 verbunden werden. In Fig. 3 ist der Computer 24 sowie ein Backofen 34 über Datenleitungen 26 mit dem Internet 28 verbunden. Der Backofen 34 weist ein Steuerungsmodul 35 auf, das eine Datenschnittstelle zum Anschluss der Datenleitung 26 aufweist. An dem Backofen 34 ist eine Erfassungseinheit 33 angeordnet, die ebenfalls über eine Datenleitung 26 mit dem Internet 28 verbunden ist. Die Erfassungseinheit 33 kann eine Kamera sein, welche Barcodes an den Backgutträgern und/oder an Backwagen, auf denen die Backgutträger in den Backofen 34 transportiert werden, erfasst. Es können weitere Erfassungseinheiten in den Räumlichkeiten angeordnet werden, in denen die belegten Backgutträger gehandhabt werden, damit jeder Backgutträger lückenlos bis zum Einbringen in den Backofen getrackt, also verfolgt, werden kann. Gegebenenfalls kann durch weitere Ausgabeeinheiten oder Anzeigen auch die korrekte Anordnung von Backgutträgern in dem Backwagen angezeigt werden, so dass die Echtzeit-Anzeige der Belegungsinformationen der Backgutträger mit der Echtzeit-Anzeige der Beladungsinformationen für den Backwagen kombiniert wird. Auf diese Weise wird ausgeschlossen, dass Backwaren, die unterschiedliche Backprogramme erfordern, auf einem Backwagen angeordnet werden.

Wenn die Erfassungseinheit 33 als Kamera ausgebildet ist, kann sie auch Bilddaten von den fertigen Backwaren bei der Entnahme aus dem Backofen erfassen und an den Computer übermitteln. Diese Bilddaten können für die Optimierung der Backparameter und der Belegung der verschiedenen Backgutträger verwendet werden.

Es ist für den Fachmann offensichtlich, dass ein anderes Datennetzwerk als das Internet 28 verwendet werden kann. Wenn alle Geräte innerhalb eines Gebäudes angeordnet sind, kann ein lokales Computer-Netzwerk (LAN) verwendet werden. Da aber das Internet 28 die weiteste Verbreitung aller Datennetzwerke aufweist, ist die Verwendung des Internets 28 für die erforderliche Datenübertragung sinnvoll. Auch kann jedes Gerät mit einer anderen Datenverbindung als der dargestellten mit dem Datennetzwerk gekoppelt sein.

Der Backofen 34 in Fig. 3 kann sich in dem gleichen Raum wie der Vorbereitungstisch 10 oder in einem benachbarten Raum befinden. Der Computer 24 kann eine große Distanz zum Vorbereitungstisch 10 sowie auch zum Backofen 34 aufweisen. Beispielsweise kann ein zentraler Computer 24 die Vorbereitungstische 10 und/oder Backöfen 34 in mehreren Verkaufsgeschäften in unterschiedlichen Städten oder Ländern ansteuern. Der Computer 24 kann beispielsweise von der Zentrale einer Kette von Verkaufsgeschäften betrieben werden.

Es ist auch möglich, dass der Computer 24 von dem Hersteller des Backofens 34 betrieben wird. Der Hersteller verfügt über sehr viel Erfahrung mit seinen Produkten sowie mit der Backtechnik allgemein. Daher ist es dem Hersteller des Backofens 34 möglich, optimale Programme für die Belegung der Backgutträger zu wählen. Darüber hinaus verfügt der Computer 24 vorzugsweise über Programmmodule, die der Selbstoptimierung durch den Einsatz künstlicher Intelligenz dienen. Für die Selbstoptimierung können die Daten der Bildaufnahmevorrichtung 22, 22' verwendet werden. Es ist auch möglich, weitere Bildaufnahmevorrichtungen (nicht dargestellt) in der Nähe des Backofens 34 anzuordnen, die das Backergebnis erfassen und durch Bildauswertung die Backqualität beurteilen. Alternativ oder zusätzlich kann das Bedienungspersonal durch eine Eingabevorrichtung Informationen über die Backqualität eingeben. Wenn der Computer 24 in der Zentrale einer Verkaufskette angeordnet ist, können die Daten aller Verkaufsgeschäfte berücksichtigt werden. Ist der Computer 24 dagegen beim Hersteller des Backofens 34 angeordnet, können die Daten aller teilnehmenden Kunden des Backofenherstellers für die Optimierung berücksichtigt werden und der Hersteller kann die digitale Belegungsanweisung als Sonderdienstleistung mit seinen Backofensystemen anbieten.

In den Zeichnungen weist der Computer 24 eine interne Datenspeichereinheit 25 in Form eines eingebauten Laufwerks auf. Die Datenspeicherung kann aber auch auf einer externen Datenspeichereinheit, z.B. einem Cloud-Speicher, erfolgen. Der Computer kann auch in das Steuerungsmodul 35 des Backofens 34 integriert sein. In diesem Fall kann die Datenspeichereinheit entweder lokal ebenfalls im Steuerungsmodul 35 angeordnet oder dezentral in der Cloud oder auf einem Server des Herstellers angeordnet sein.

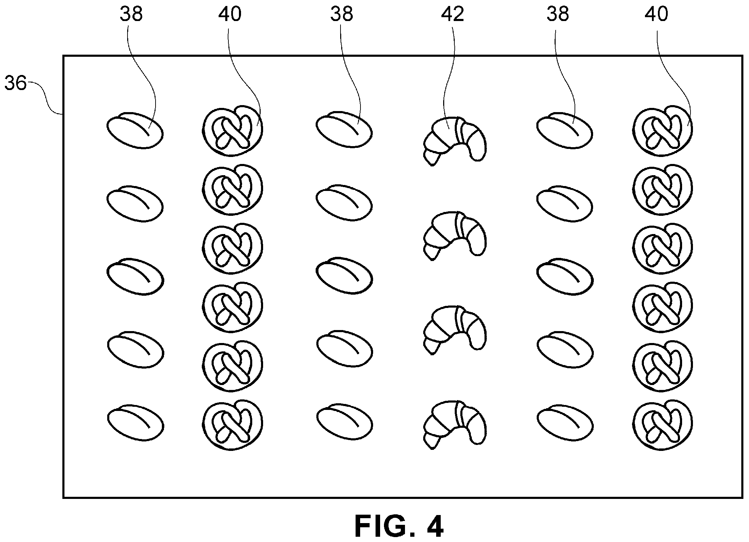

Die Fig. 4 zeigt beispielsweise eine Darstellung, wie sie von der Anzeigevorrichtung 20, 20' oder 32 dargestellt werden kann. Ein Rahmen 36 definiert die Konturen des Backgutträgers, in der Regel ein Backblech. Dieser Rahmen 36 kann auf die Arbeitsoberfläche 18 projiziert werden, damit das Bedienungspersonal ein Backblech in dem Rahmen 36 platziert. Alternativ kann das Backblech an beliebiger Stelle der Arbeitsoberfläche angeordnet werden und der Rahmen 36 an die Position des Backblechs projiziert werden. Schematische Darstellungen von Brötchen 38, Laugenbrezeln 40 und Croissants 42 werden entweder durch den Projektor 32 oder durch den Bildschirm 20, 20' als Anzeigevorrichtung dargestellt. Insbesondere im Falle der Darstellung durch den Projektor 32 kann eine Bildverarbeitungssoftware die Darstellungen unmittelbar auf die Position auf dem Backblech projizieren, auf die der entsprechende Teigling aufzulegen ist. Dafür kann mindestens ein Anschlag vorgesehen sein, der die Position des Backblechs festlegt. Die Bildverarbeitungssoftware errechnet dann die entsprechende Positionierung der Teiglinge in Bezug auf diesen Anschlag. Das Backblech kann aber auch frei auf die Arbeitsoberfläche 18 aufgelegt werden und die Bildverarbeitungssoftware ermittelt die Position des Backbleches und berechnet die Positionen der Darstellungen der Teiglinge auf diesem Backblech. Das Bedienungspersonal muss dann lediglich einen Teigling für ein Brötchen auf die entsprechenden Brötchendarstellung 38, einen Teigling für eine Brezel auf eine Brezeldarstellung 40 oder einen Teigling für ein Croissant auf eine Croissant-Darstellung 42 auflegen.

Die Darstellungen 38, 40, 42 für die Backwaren können anfänglich beispielsweise in grüner Farbe durch ein Projektor 32 auf einen Backgutträger projiziert werden. Wenn ein Teigling aufgelegt ist, kann die Farbe der Projektion in Rot geändert werden, sodass das Bedienungspersonal schon allein an der Farbe erkennt, ob ein Teigling bereits aufgelegt ist. Wenn ein Teigling falsch, insbesondere in falscher Positionen abgelegt ist, kann die Soll-Position des Teiglings in gelber Farbe oder einer anderen Signalfarbe angezeigt werden und beispielsweise blinken. So wird die Aufmerksamkeit des Betrachters auf die Tatsache gelenkt, dass der Teigling nicht vorschriftsmäßig an dem ihm bestimmten Ort liegt.

Wie oben erwähnt, kann die Anzahl und die Art der aufzulegenden Teiglinge durch den Computer 24 vorgegeben werden. Der Computer kann beispielsweise Erfahrungswerte abspeichern, aus denen sich ergibt, zu welchem Zeitpunkt welche Anzahl welcher Backwaren herzustellen ist. Darüber hinaus kann der Computer Verkaufszahlen über ein Kassensystem erfassen und bei der Anforderung neuer Backwaren berücksichtigen. Der Computer kann anhand der aktuell erforderlichen Backwaren eine optimale Belegung der Backgutträger und eine optimale Beschickung des Backofens errechnen. Je nach Menge der Backwaren und Art der Backwaren können diese optimiert auf dem Backgutträger ausgerichtet werden.

Über die Bildaufnahmevorrichtung 22, 22' kann der Computer 24 aber auch weitere Zustände erfassen, beispielsweise den Zustand des Backblechs, ob überhaupt ein Backblech vorhanden ist, ob ein Backblech beschädigt oder verschmutzt ist bzw. ob die korrekte Größe, Beschichtung oder Farbe des Backblechs zum Einsatz kommt, oder auch ob Backpapier auf dem Backblech verwendet wird.

Mittels der oben beschriebenen Vorrichtung und dem oben beschriebenen Verfahren ist es möglich, auch wenig erfahrenes Personal anzuleiten, Backgutträger optimal zu belegen. Dabei werden nicht nur die Erfordernisse des Backvorgangs, sondern auch die aktuellen Verkaufsgeschwindigkeiten und Produktanforderungen berücksichtigt, wenn der Computer zur Steuerung der Belegung der Backgutträger mit einem Kassensystem gekoppelt ist.

Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10, 10': Vorbereitungstisch
- 12: Tischgestell
- 14: Schubladen
- 16: Ablagefach
- 18, 18': Arbeitsoberfläche
- 20, 20': Bildschirm, Anzeigevorrichtung
- 22, 22': Bildaufnahmevorrichtung
- 24: Computer
- 26: Datenleitung
- 28: Internet
- 30: WLAN-Router
- 32: Projektor, Anzeigevorrichtung
- 33: Erfassungseinheit
- 34: Backofen
- 35: Steuerungsmodul
- 36: Rahmen
- 38: Brötchen-Darstellung
- 40: Brezel-Darstellung
- 42: Croissant-Darstellung

## Patentansprüche

1. Verfahren zur Optimierung eines Backvorgangs mit folgenden Schritten:
• Auflegen eines Backgutträgers auf eine Arbeitsfläche (18, 18');
• Belegen des Backgutträgers mit Teiglingen durch das Bedienungspersonal;
• Erfassen der Ist-Belegung durch eine Bildaufnahmevorrichtung (22, 22') und Übertragung der erfassten Daten an einen Computer (24);
**gekennzeichnet durch** folgende Schritte:
• Speichern von Daten für die Soll-Belegung, einschließlich des genauen Belegungsplans mit den Positionen und Ausrichtungen der Backwaren, auf einer mit dem Computer (24) gekoppelten Datenspeichereinheit (25);
• Übertragung von Anzeigedaten durch den Computer (24) an eine digital angesteuerte Anzeigevorrichtung (20, 20', 32) nahe der Arbeitsfläche (18, 18') zum Anzeigen einer Soll-Belegung;
• Auswerten der erfassten Daten der Ist-Belegung durch den Computer (24) und Vergleich mit den Daten der Soll-Belegung;
• Einwirken auf den Belegungsvorgang und/oder den Backvorgang durch den Computer (24) auf der Grundlage des Vergleichs der erfassten Daten der Ist-Belegung mit den Daten der Soll-Belegung, wobei ein Signal ausgegeben wird, wenn die erfasste Ist-Belegung von der Soll-Belegung abweicht.

2. Verfahren nach Anspruch 1, **dadurch gekennzeichnet, dass** das Einwirken auf den Belegungsvorgang mindestens einen der folgenden Schritte umfasst:
• Ausgabe eines Alarmsignals durch den Computer (24) im Falle einer Fehlbelegung;
• Ausgabe einer Darstellung der Ist-Belegung, in der die Fehlbelegung optisch hervorgehoben ist und zusätzlich die Soll-Belegung dargestellt ist.

3. Verfahren nach Anspruch 1 oder 2, **dadurch gekennzeichnet, dass** das Einwirken auf den Backvorgang die Übertragung von Backparametern an einen Backofen (34) über eine Datenverbindung (26) zum Backofen (34) auf der Grundlage der erfassten Ist-Belegung umfasst.

4. Verfahren nach Anspruch 3, **dadurch gekennzeichnet, dass** jeder belegte Backgutträger beim Einbringen in den Backofen erfasst wird.

5. Verfahren nach einem der vorangehenden Ansprüche, **dadurch gekennzeichnet, dass** die Backparameter auf einer mit dem Computer (24) gekoppelten Datenspeichereinheit gespeichert werden.

6. Verfahren nach einem der vorangehenden Ansprüche, **dadurch gekennzeichnet, dass** die Datenübertragung von und zu dem Computer (24) und/oder der Datenspeichereinheit über das Internet (28) erfolgt.

7. Verfahren nach einem der vorangehenden Ansprüche, **dadurch gekennzeichnet, dass** Optimierungsalgorithmen nach den Methoden der künstlichen Intelligenz zumindest einen der folgenden Parameter optimiert:
• die Backparameter;
• die Auswertung der Bilddaten;
• die Soll-Belegung der Backgutträger;
• die Gruppierung der Backwaren, die auf einem Backblech und/oder während eines Backvorgangs miteinander kombiniert werden.

8. Vorrichtung zur Optimierung eines Backvorgangs gemäß dem Verfahren nach einem der vorangehenden Ansprüche, mit einer Arbeitsfläche zum Auflegen eines Backgutträgers und mit einer Bildaufnahmevorrichtung zum Erfassen der Ist-Belegung des Backgutträgers, die zur Übertragung der erfassten Daten mit einem Computer (24) gekoppelt ist, **gekennzeichnet durch**
• eine mit dem Computer (24) gekoppelte Datenspeichereinheit (25), auf der die Daten für eine Soll-Belegung, einschließlich des genauen Belegungsplans mit den Positionen und Ausrichtungen der Backwaren, gespeichert sind;
• eine digital angesteuerte Anzeigevorrichtung nahe der Arbeitsfläche zum Anzeigen der Soll-Belegung;
• wobei der Computer (24) Anzeigedaten an die Anzeigevorrichtung überträgt sowie die erfassten Daten der Ist-Belegung auswertet und mit den Daten der Soll-Belegung vergleicht;
• eine Signalvorrichtung zur Ausgabe eines Alarmsignals, wenn die erfasste Ist-Belegung von der Soll-Belegung abweicht.

9. Vorrichtung nach Anspruch 8, **dadurch gekennzeichnet, dass** auf dem Prozessor des Computers (24) ein Computerprogrammprodukt zum Auswerten der erfassten Daten und zum Vergleich mit den Daten der Soll-Belegung sowie zum Einwirken auf den Belegungsvorgang und/oder den Backvorgang abläuft.

10. Vorrichtung nach Anspruch 8 oder 9, **dadurch gekennzeichnet, dass** mit dem Computer (24) mindestens eine Erfassungseinheit (33) verbunden ist, die zumindest eines der Folgenden erfasst:
• das Einbringen mindestens eines belegten Backgutträgers in einen Backofen (34);
• die Entnahme mindestens eines belegten Backgutträgers aus dem Backofen (34).

11. Vorrichtung nach einem der Ansprüche 8 bis 10, **dadurch gekennzeichnet, dass** mit dem Computer (24) eine Signalvorrichtung gekoppelt ist.

12. Vorrichtung nach einem der Ansprüche 8 bis 11, **dadurch gekennzeichnet, dass** der Computer (24) über eine Datenverbindung (26) mit einem Backofen (34) gekoppelt ist.

13. Vorrichtung nach einem der Ansprüche 8 bis 12, **dadurch gekennzeichnet, dass** der Computer (24) zur Datenübertragung von und zu dem Computer (24) mit dem Internet (28) verbunden ist.

14. Vorrichtung nach einem der Ansprüche 8 bis 13, **gekennzeichnet durch** mindestens eins der folgenden Merkmale:
• die Anzeigevorrichtung ist ein Bildschirm (20, 20') ;
• die Anzeigevorrichtung ist ein Projektor (32), insbesondere ein VideoProjektor oder ein Laserprojektor;
• die Bildaufnahmevorrichtung (22) ist eine Monochromkamera;
• die Bildaufnahmevorrichtung (22) ist eine Farbkamera;
• die Bildaufnahmevorrichtung (22) ist eine Stereoskopiekamera;
• die Bildaufnahmevorrichtung (22) ist eine Time-of-Flight (ToF) Kamera;
• die Bildaufnahmevorrichtung (22) ist ein Laserscanner.

## Claims

1. Method for optimizing a baking process, having the following steps:
• placing a baked goods carrier onto a work surface (18, 18');
• filling the baked goods carrier with pieces of dough by the operating personnel;
• capturing the actual filling by means of an image recording apparatus (22, 22') and transmitting the captured data to the computer (24);
**characterized by** the following steps:
• storing on a data storage unit coupled to the computer (24) data for the desired filling, including the exact filling plan having the positions and orientations of the baked goods;
• transmitting display data, by means of a computer (24), to a digitally controlled display apparatus (20, 20', 32) close to the work surface (18, 18') for displaying desired filling;
• evaluating the captured data of the actual filling by means of the computer (24) and comparing them with the data relating to the desired filling;
• acting on the filling process and/or the baking process by means of the computer (24) on the basis of the comparison of the captured data of the actual filling with the data relating to the desired filling, wherein a signal is output if the captured actual filling deviates from the desired filling.

2. Method according to Claim 1, **characterized in that** the operation of acting on the filling process comprises at least one of the following steps:
• outputting an alarm signal by means of the computer (24) in the event of an incorrect filling;
• outputting a representation of the actual filling in which the incorrect filling is optically highlighted and the desired filling is additionally represented.

3. Method according to Claim 1 or 2, **characterized in that** the operation of acting on the baking process comprises the transmission of baking parameters to a baking oven (34) via a data connection (26) to the baking oven (34) on the basis of the captured actual filling.

4. Method according to Claim 3, **characterized in that** each baked goods carrier which has been filled is captured during introduction into the baking oven.

5. Method according to one of the preceding claims, **characterized in that** the baking parameters are stored on a data storage unit coupled to the computer (24).

6. Method according to one of the preceding claims, **characterized in that** the data are transmitted from and to the computer (24) and/or the data storage unit via the Internet (28).

7. Method according to one of the preceding claims, **characterized in that** optimization algorithms according to artificial intelligence methods optimize at least one of the following parameters:
• the baking parameters;
• the evaluation of the image data;
• the desired filling of the baked goods carriers;
• the grouping of the baked goods which are combined with one another on a baking tray and/or during a baking process.

8. Apparatus for optimizing a baking process according to the method of one of the preceding claims, having a work surface for the placement of a baked goods carrier and having an image recording apparatus for capturing the actual filling of the baked goods carrier, which apparatus is coupled to the computer for the purpose of transmitting the captured data, **characterized by**
• a data storage unit (25) coupled to the computer (24) with the data of the desired filling stored thereon, including the exact filling plan having the positions and orientations of the baked goods,
• a digitally controlled display apparatus close to the work surface for displaying desired filling;
• wherein the computer (24) transmits display data to the display apparatus and evaluates the captured data of the actual filling and compares them with the data relating to the desired filling;
• a signaling apparatus for outputting an alarm signal if the captured actual filling deviates from the desired filling.

9. Apparatus according to Claim 8, **characterized in that** a computer program product for evaluating the captured data and for comparing them with the data relating to the desired filling and for acting on the filling process and/or the baking process runs on the processor of the computer (24).

10. Apparatus according to Claim 8 or 9, **characterized in that** at least one capture unit (33) is connected to the computer (24) and captures at least one of the following:
• the introduction of at least one filled baked goods carrier into a baking oven (34);
• the removal of at least one filled baked goods carrier from the baking oven (34).

11. Apparatus according to one of Claims 8 to 10, **characterized in that** a signaling apparatus is coupled to the computer (24).

12. Apparatus according to one of Claims 8 to 11, **characterized in that** the computer (24) is coupled to a baking oven (34) via a data connection (26).

13. Apparatus according to one of Claims 8 to 12, **characterized in that** the computer (24) is connected to the Internet (28) for the purpose of transmitting data from and to the computer (24).

14. Apparatus according to one of Claims 8 to 13, **characterized by** at least one of the following features:
• the display apparatus is a screen (20, 20');
• the display apparatus is a projector (32), in particular a video projector or a laser projector;
• the image recording apparatus (22) is a monochrome camera;
• the image recording apparatus (22) is a color camera;
• the image recording apparatus (22) is a stereoscopic camera;
• the image recording apparatus (22) is a time-of-flight (ToF) camera;
• the image recording apparatus (22) is a laser scanner.

## Revendications

1. Procédé d'optimisation d'un processus de cuisson, comprenant les étapes suivantes :
• placer une plaque de cuisson sur une surface de travail (18, 18') ;
• recouvrir la plaque de cuisson avec des pâtons via l'opérateur ;
• détecter l'occupation réelle par un dispositif de capture d'image (22, 22') et transmettre les données détectées à un ordinateur (24) ;
**caractérisé par** les étapes suivantes :
• stocker des données sur l'occupation cible, y compris le plan d'occupation précis avec les positions et les directions des produits de boulangerie, sur une unité de stockage de données (25) couplée à l'ordinateur (24) ;
• transmettre des données d'affichage via l'ordinateur (24) à un dispositif d'affichage à commande numérique (20, 20', 32) à proximité de la surface de travail (18, 18') pour afficher une occupation cible ;
• évaluer les données détectées de l'occupation réelle via l'ordinateur (24) et comparer avec les données de l'occupation cible ;
• agir sur le processus d'occupation et/ou le processus de cuisson par l'intermédiaire de l'ordinateur (24) sur la base de la comparaison des données détectées de l'occupation réelle avec les données de l'occupation cible, dans lequel un signal est délivré en sortie lorsque l'occupation réelle détectée diffère de l'occupation cible.

2. Procédé selon la revendication 1, **caractérisé en ce que** l'action sur le processus d'occupation comprend au moins l'une des étapes suivantes consistant à :
• délivrer en sortie un signal d'alarme via l'ordinateur (24) en cas d'occupation défectueuse ;
• délivrer en sortie une représentation de l'occupation réelle dans laquelle l'occupation défectueuse est mise en évidence de manière optique et, en outre, l'occupation cible est représentée.

3. Procédé selon la revendication 1 ou 2, **caractérisé en ce que** l'action sur le processus de cuisson est la transmission de paramètres de cuisson à un four de cuisson (34) par l'intermédiaire d'une connexion de données (26) au four de cuisson (34) sur la base de l'occupation réelle détectée.

4. Procédé selon la revendication 3, **caractérisé en ce que** chaque plaque de cuisson occupée est détectée pendant une introduction dans le four de cuisson.

5. Procédé selon l'une quelconque des revendications précédentes, **caractérisé en ce que** les paramètres de cuisson sont stockés sur une unité de stockage de données couplée à l'ordinateur (24).

6. Procédé selon l'une quelconque des revendications précédentes, **caractérisé en ce que** les données sont transmises depuis et vers l'ordinateur (24) et/ou l'unité de stockage de données via l'Internet (28).

7. Procédé selon l'une quelconque des revendications précédentes, **caractérisé en ce que** des algorithmes d'optimisation, selon les méthodes de l'intelligence artificielle, optimisent au moins l'un des paramètres suivants :
• les paramètres de cuisson ;
• l'évaluation des données d'image ;
• l'occupation cible de la plaque de cuisson ;
• le regroupement des produits de boulangerie qui sont combinés les uns aux autres sur une plaque de cuisson et/ou pendant un processus de cuisson.

8. Dispositif pour optimiser un processus de cuisson selon le procédé selon l'une quelconque des revendications précédentes, comprenant une surface de travail pour la mise en place d'une plaque de cuisson et un dispositif de capture d'image pour détecter l'occupation réelle de la plaque de cuisson, qui est couplé à un ordinateur (24) pour transmettre les données détectées, **caractérisé par**
• une unité de stockage de données (25) couplée à l'ordinateur (24), sur laquelle sont stockées les données pour une occupation cible, y compris le plan d'occupation précis avec les positions et les directions des produits de boulangerie ;
• un dispositif d'affichage à commande numérique à proximité de la surface de travail pour afficher l'occupation cible ;
• dans lequel l'ordinateur (24) transmet des données d'affichage sur le dispositif d'affichage de même qu'il évalue les données détectées de l'occupation réelle et compare avec les données de l'occupation cible,
• un dispositif de signalisation pour délivrer en sortie un signal d'alarme, lorsque l'occupation réelle détectée diffère de l'occupation cible.

9. Dispositif selon la revendication 8, **caractérisé en ce que** sur le processeur de l'ordinateur (24) tourne un produit de programme informatique pour évaluer les données détectées et pour comparer avec les données de l'occupation cible de même que pour agir sur le processus d'occupation et/ou le processus de cuisson.

10. Dispositif selon la revendication 8 ou 9, **caractérisé en ce qu'**au moins une unité de détection (33) est connectée à l'ordinateur (24), qui détecte au moins l'un des éléments suivants :
• l'introduction d'au moins une plaque de cuisson occupée dans un four de cuisson (34) ;
• le retrait d'au moins une plaque de cuisson occcupée à partir du four de cuisson (34).

11. Dispositif selon l'une des revendications 8 à 10, **caractérisé en ce qu'**un dispositif de signalisation est couplé à l'ordinateur (24).

12. Dispositif selon l'une des revendications 8 à 11, **caractérisé en ce que** l'ordinateur (24) est couplé à un four de cuisson (34) par l'intermédiaire d'une connexion de données (26).

13. Dispositif selon l'une des revendications 8 à 12, **caractérisé en ce que** l'ordinateur (24), pour transmettre des données depuis et vers l'ordinateur (24), est connecté à l'Internet (28).

14. Dispositif selon l'une des revendications 8 à 13, **caractérisé par** au moins l'une des caractéristiques suivantes :
• le dispositif d'affichage est un écran (20, 20') ;
• le dispositif d'affichage est un projecteur (32), en particulier un projecteur vidéo ou un projecteur laser ;
• le dispositif de capture d'image (22) est une caméra monochrome ;
• le dispositif de capture d'image (22) est une caméra couleur ;
• le dispositif de capture d'image (22) est une caméra stéréoscopique ;
• le dispositif de capture d'image (22) est une caméra temps de vol (ToF) ;
• le dispositif de capture d'image (22) est un scanner laser.
